# EUROPÄISCHE PATENTANMELDUNG

(11) **EP 0 688 799 A1**
(43) Veröffentlichungstag der Anmeldung: **27.12.1995**
(21) Anmeldenummer: 95109310.3
(22) Anmeldetag: 16.06.1995
(51) Int. Cl.: C08F 218/08, C08F 226/10

(54) **Verfahren zur Herstellung von in Wasser klar löslichen, restmonomerenarmen Copolymerisaten aus N-Vinylpyrrolidon und Vinylacetat**

(30) Priorität: 23.06.1994 DE 4421936
(71) Anmelder: BASF Aktiengesellschaft, D-67063 Ludwigshafen (DE)
(72) Erfinder: Blankenburg, Rainer, Dr., D-67067 Ludwigshafen (DE); Sanner, Axel, Dr., D-67227 Frankenthal (DE)

(57) **Zusammenfassung**

Verfahren zur Herstellung von in Wasser klar löslichen Copolymerisaten aus N-Vinylpyrrolidon und Vinylacetat durch radikalische Lösungspolymerisation, wobei zunächst eine Mischung der Monomeren, welche höchstens 15 Gew.-% der Gesamtmenge an N-Vinylpyrrolidon enthält copolymerisiert wird, die Polymerisation unter Zugabe der Restmenge an N-Vinylpyrrolidon festgesetzt wird, wobei die Polymerisation in Gegenwart eines Azo-Starters erfolgt, und anschließend eine Nachpolymerisation in Gegenwart eines peroxidischen Radikalstarters fortsetzt.

## Beschreibung

Die vorliegende Erfindung betrifft ein verbessertes Verfahren zur Herstellung von in Wasser klar löslichen, restmonomerenarmen Copolymerisaten aus
(A) 45 - 90 Gew.-% N-Vinylpyrrolidon,
(B) 10 - 55 Gew.-% Vinylacetat
(C) 0 - 10 Gew.-% weiterer radikalisch copolymerisierbarer Monomeren
durch radikalische Polymerisation in einem organischen Lösungsmittel in Gegenwart eines Radikalinitiators.

Weiterhin betrifft die Erfindung die Verwendung der so hergestellten Copolymerisate in kosmetischen Zubereitungen.

Aus der EP-A 418 721 ist ein Verfahren zur Herstellung von Copolymerisaten aus N-Vinylpyrrolidon und Vinylacetat bekannt, bei dem zur Entfernung wassertrübender Verunreinigungen das bei der Copolymerisation verwendete Lösungsmittel destillativ entfernt und gegen Wasser ausgetauscht wird. Bei der Destillation fällt dabei verunreinigtes Lösungsmittel an.

In der EP-A 161 ist ein Verfahren zur Herstellung von restmonomerenarmen Copolymerisaten aus N-Vinylpyrrolidon und Vinylacetat beschrieben, bei dem im Anschluß an die Hauptpolymerisation eine Nachpolymerisation in Gegenwart peroxidischer Radikalinitiatoren durchgeführt wird. Die demnach erhaltenen Copolymerisate sind jedoch nicht ausreichend klar wasserlöslich.

Aus der US-A 4 520 179 und der USA 4 554 311 ist die Herstellung von Copolymerisaten aus N-Vinylpyrrolidon und Vinylacetat durch Copolymerisation in Gegenwart von t-Butylperoxypivalat als Radikalinitiator bekannt, wobei die entstehenden Produkte nicht klar wasserlöslich sind.

Nachteilig an den bisher bekannten Verfahren ist, daß die dabei entstehenden Produkte den Anforderungen bezuglich geringem Restmonomerengehalt bei gleichzeitiger Klarlöslichkeit in wäßrigen Systemen nur unvollkommen genügen, beziehungsweise ein aufwendiger destillativer Lösungsmittelaustausch notwendig war, um die oben genannte Eigenschaftskombination zu erreichen.

Aufgabe der vorliegenden Erfindung war es daher, ein verbessertes Verfahren zur Herstellung solcher Copolymerisate zu finden, welches auf einfache Weise die Herstellung von restmonomerenarmen, klar löslichen Produkten ermöglicht.

Demgemäß wurde ein Verfahren zur Herstellung von in Wasser klar löslichen, restmonomerenarmen Copolymerisaten aus
(A) 45 - 90 Gew.-% N-Vinylpyrrolidon,
(B) 10 - 55 Gew.-% Vinylacetat
(C) 0 - 10 Gew.-% eines weiteren radikalisch copolymerisierbaren Monomeren
durch radikalische Polymerisation in einem organischen Lösungsmittel in Gegenwart eines Radikalstarters gefunden, welches dadurch gekennzeichnet ist, daß man
(I) zunächst eine Mischung der Monomeren (A), (B) und (C), welche höchstens 15 Gew.-% der Gesamtmenge des Monomeren (A) enthält, copolymerisiert, und
(II) die Polymerisation unter Zugabe der Restmenge des Monomeren (A) fortsetzt,
   wobei die Polymerisation der Verfahrensschritte (I) und (II) bei Temperaturen von 60 bis 100°C in Gegenwart einer Azoverbindung als Radikalinitiator durchgeführt wird, und
(III) anschließend eine Nachpolymerisiation unter Verwendung von Radikalinitiatoren der allgemeinen Formel I

   R¹-O-O-R² I

   worin R¹ für einen Alkylrest mit 4 bis 8 C-Atomen steht und R² für Wasserstoff oder R¹ oder für -R³-O-O-R¹, worin R³ einen linearen oder verzweigten Alkylenrest mit 4 bis 10 C-Atomen bedeutet, bei Temperaturen von 110 bis 150°C durchführt.

Nach dem erfindungsgemäßen Verfahren werden bevorzugt Copolymerisate aus
(A) 70 - 50 Gew.-% N-Vinylpyrrolidon
(B) 30 - 50 Gew.-% Vinylacetat
(C) 0 - 5 Gew.-% weiterer copolymerisierbarer Monomeren hergestellt.

Als weitere copolymerisierbare Monomere (C), mit welchen die Eigenschaften des Copolymerisats modifiziert werden können, eignen sich insbesondere solche, die die Wasserlöslichkeit des entstehenden Terpolymeren nicht beeinträchtigen und die aufgrund ihrer toxikologischen Eigenschaften für den Einsatz in Kosmetika geeignet sind, beispielsweise die Methyl-, Ethyl-, n-Propyl-, n-Butyl- oder tert.-Butylester der Acrylsäure oder der Methacrylsäure, Maleinsäure und deren Ester oder Halbester, N-Alkylierte- oder N-alkylolierte Acrylamide oder Methacrylamide, Vinylverbindungen wie beispielsweise Styrol oder Vinylimidazol, Vinylpiperidon, Vinylcaprolacton oder Vinylester von C₃-C₁₀-Monocarbonsäuren.

Die Copolymerisate sollen K-Werte von 10 bis 60, vorzugsweise 20 bis 40 aufweisen. Der jeweils gewünschte K-Wert läßt sich in an sich bekannter Weise durch Wahl der Polymerisationsbedingungen, beispielsweise der Polymerisationstemperatur, der Monomerenkonzentration und der Initiatorkonzentration, einstellen. Die K-Werte werden in Analogie zu "Fikentscher, Cellulosechemie, Bd. 13, S. 58 bis 64 (1932) bei 25°C in dem Alkohol gemessen, der als Lösungsmittel bei der Polymerisation diente und stellen ein Maß für das mittlere Molekulargewicht des Polymeren dar.

Derartige Copolymerisate haben üblicherweise Glasübergangstemperaturen zwischen 50 und 150°C, insbesondere zwischen 80 und 130°C.

Die Herstellung erfolgt in einem organischen Lösungsmittel, wobei als Lösungsmittel vor allem die auf dem Kosmetikgebiet üblicherweise eingesetzte C₁-C₄-Alkanole wie Methanol, n-Propanol, n-Butanol oder Isobutanol oder bevorzugt Ethanol oder Isopropanol oder Gemische der genannten Alkohole dienen. Das in der Kosmetik eingesetzte Ethanol kann bis zu 5 % eines Vergällungsmittels, wie beispielsweise Diethylphthalat, enthalten.

Das erfindungsgemäße Verfahren wird so durchgeführt, daß in einem ersten Verfahrensschritt (I) eine Mischung aus den Monomeren (A), (B) und (C) welche höchstens 15 Gew.-%, bevorzugt zwischen 8 bis 12 Gew.-%, der Gesamtmenge des Monomeren (A) enthält, der Polymerisationszone zugeführt wird. Dabei kann ein Teil des Monomerengemischs vorgelegt und der Rest kontinuierlich zugegeben werden oder das gesamte Monomerengemisch kontinuierlich zugegeben werden. Sobald die Zugabe des Monomerengemischs beendet ist, wird in Verfahrensschritt (II) die Polymerisation unter kontinuierlicher Zugabe der Restmenge des Monomeren (A) festgesetzt.

Als Radikalinitiator in den Verfahrensschritten (I) und (II) eignen sich Azoverbindungen, bevorzugt 2,2'-Azo-bis-isobutyronitril, 2,2'-Azo-bis-isovaleronitril und 2,2'-Azo-bis-isobutyromethylester.

Die Zugabe des Radikalinitiators während der Polymerisation erfolgt vorteilhafterweise kontinuierlich, so daß ständig unverbrauchter Initiator in der Polymerisationslösung vorhanden ist.

Die Menge an Radikalinitiator beträgt üblicherweise 0,1 bis 5 Gew.-%, bevorzugt 0,2 bis 1 Gew.-%, bezogen auf die Menge an Monomeren (A).

Die Polymerisationsreaktion der Verfahrensschritte (I) und (II) wird vorteilhafterweise bei Temperaturen von 60 bis 100°C, vorzugsweise 70 bis 85°C durchgeführt, wobei die Reaktion unter Eigendruck, Normaldruck oder unter Schutzgasüberdruck durchgeführt werden kann. Als Schutzgas eignet sich beispielsweise Stickstoff.

Die Dauer der Polymerisation der Verfahrensschritte (I) und (II) wird üblicherweise so bemessen, daß die Zugabe des Monomerengemischs (Stufe I) bzw. des Monomeren (Stufe II) so schnell erfolgt, daß die freigesetzte Polymerisationswärme unter den üblichen technischen Bedingungen gut abgeführt werden kann. In Verfahrensschritt (II) polymerisiert man üblicherweise solange, bis das angereicherte Vinylacetat im wesentlichen mit dem Vinylpyrrolidon umgesetzt ist. Dem Fachmann ist bekannt, wie er die Zulaufgeschwindigkeit und Reaktionszeit entsprechend einstellen kann.

Im Anschluß daran führt man im Verfahrensschritt (III) eine Nachpolymerisation bei Temperaturen von 110 bis 150°C, bevorzugt 120 bis 130°C, durch, unter Verwendung eines Radikalinitiators der allgemeinen Formel I

R¹-O-O-R² I

worin R¹ für einen Alkylrest mit 4 bis 8 C-Atomen steht und R² für Wasserstoff oder R¹ oder für -R³-O-O-R¹, worin R³ einen linearen oder verzweigten C₄-C₁₀-Alkylenrest bedeutet. Als Alkylreste kommen beispielsweise tert. -Butyl- oder t-Amyl-Reste in Betracht. Hat R² die Bedeutung Wasserstoff, so handelt es sich um Alkylhydroperoxide. Ein geeigneter Radikalinitiator ist beispielsweise 2,5-Dimethyl-2,5-bis-(tert.-butylperoxy)-hexan. Bevorzugte Radikalinitiatoren sind Di-tert.-butylperoxid und Di-tert.-amylperoxid.

Die Nachpolymerisation wird vorteilhafterweise so lange durchgeführt, bis etwa 90 % des Peroxids durch radikalischen Zerfall aufgebraucht sind und Restmonomerengehalte von < 50 ppm erreicht sind.

Die nach dem erfindungsgemäßen Verfahren hergestellten alkoholischen Copolymerisatlösungen stellen klare Lösungen mit einem geringen Restmonomerengehalt dar. Üblicherweise werden Gehalte an N-Vinylpyrrolidon von < 10 ppm und Gehalte an Vinylacetat von < 50 ppm erreicht. Diese Lösungen, die üblicherweise Feststoffgehalte von 30 bis 60 Gew.-% aufweisen, können direkt für die weitere Verwendung, beispielsweise in der Haarkosmetik, eingesetzt werden.

Besonders vorteilhaft an den erfindungsgemäß hergestellten Copolymerisaten ist, daß sie bei Verdünnung mit Wasser, Alkoholen oder Wasser/Alkohol-Gemischen klare Lösungen bilden, einen sehr niedrigen Restmonomergehalt aufweisen und dabei einfach herzustellen sind. Durch die erfindungsgemäße Kombination der Verfahrensschritte und der Starterkomponenten wird der Anfall von mit Restmonomeren verunreinigten Lösungsmitteln überraschenderweise ebenso vermieden wie Trübungen. Solche Trübungen, wie sie durch die Anreicherung von Vinylacetat in der Polymerisationszone verursacht werden können, treten nicht auf.

Aufgrund der guten Löslichkeitseigenschaften und der durch den geringen Restmonomerengehalt bedingten gesundheitlichen Unbedenklichkeit eignen sie sich hervorragend für den Einsatz in kosmetischen Zübereitungen, vorzugsweise in Haarbehandlungsmitteln wie Haarsprays, Haarfestigern oder Haargelen.

Bei den in den nachstehenden Beispielen hergestellten Copolymerisat-Lösungen wurde die Trübung der wäßrigen Copolymerisat-Lösungen durch nephelometrische Trübungsmessung nach DIN 38404 bestimmt. Bei dieser Meßmethode wird photometrisch die Streuung von Licht nach Durchstrahlen der Meßlösung ermittelt, wobei diese Streuung durch die Wechselwirkung zwischen den Lichtstrahlen und den Partikeln oder Tröpfchen in der Lösung, deren Anzahl und Größe den Grad der Trübung ausmachen, bestimmt wird. Als Meßgröße dient die nephelometrische Trübungseinheit (NTU), welche bei 25°C und in 10 gew.-%iger wäßriger Lösung gemessen und durch Eichung auf der Basis von Formazin als künstlichem Trübungsmittel festgelegt wird. Je höher der NTU-Wert, desto trüber ist die Lösung.

Die Restgehalte an N-Vinylpyrrolidon und Vinylacetat in den Lösungen wurden durch gaschromatische Analyse (Nachweisgrenze 50 ppm) oder flüssigkeitschromatische Analyse (Nachweisgrenze 1 ppm) bestimmt. Die gaschromatographische Bestimmung des Restmonomerengehalts an N-Vinylpyrrolidon wurde mit einem Gaschromatographen HP 5890 (Serie 1) der Firma Hewlett Packard unter Verwendung einer 30 m DB-Wax Säule (0,5 µ) durchgeführt.

Die flüssigkeitschromatographische Bestimmung von N-Vinylpyrrolidon und Vinylacetat erfolgte über eine Lichrosorb-RP-8-Hauptsäule (7 µm) mit einem HPLC-Gerät der Firma Merck-Hitachi (Pumpen: Lichograph L 6200A und L 6000; UV/Vis-Detektor L 4250; Chromato-Integrator: D 2500).

Die K-Werte wurden in 1,0 gew.-%iger ethanolischer oder isopropanolischer Lösung bei 25°C gemessen.

### Allgemeine Vorschrift

Die Polymerisation wurde in einem druckfesten 5-l-Rührkessel durchgeführt, der durch Spülen mit Stickstoff von Sauerstoffspuren weitestgehend befreit wurde.

Dann wurde eine Mischung aus 10 Gew.-% des Monomerzulaufs I und 10 Gew.-% des Starterzulaufs I vorgelegt, mit Stickstoffgas ein Druck von 1,5 bar eingestellt und die Vorlage auf 80°C erwärmt. Nach Anspringen der Polymerisation, erkennbar an der Viskositätsänderung, wurde gleichzeitig mit der kontinuierlichen Zugabe des restlichen Monomerzulaufs I und des restlichen Starterzulaufs I begonnen. Die Zugabe des Monomerzulaufs I erfolgt jeweils während einer Zeitspanne von fünf Stunden. Die Zugabedauer des Starterzulaufs I ist bei den einzelnen Beispielen angegeben. Unmittelbar im Anschluß an die Zugabe des Monomerzulaufs I erfolgte die Zugabe des Monomerzulaufs II; die Zugabedauer ist bei den einzelnen Beispielen angegeben.

Nach Beendigung der Zugabe des Starterzulaufs I wurde die Temperatur noch zwei Stunden auf 80°C gehalten. Anschließend wurde der Starterzulauf II zugegeben und der geschlossene Kessel noch acht Stunden auf 130°C erhitzt.

### Beispiel 1

Monomerzulauf I:
950 g N-Vinylpyrrolidon
450 g Vinylacetat
1000 g Ethanol
Starterzulauf I:
8 g 2,2'-Azo-bis-isovaleronitril
200 g Ethanol
Zugabedauer: 7 Stunden
Monomerzulauf II:
100 g N-Vinylpyrrolidon
Zugabedauer: 1 Stunde
Starterzulauf II:
10 g Di-tert.-butylperoxid
350 g Ethanol.

Die erhaltene klare, farblose und viskose Lösung wies einen Feststoffgehalt von 50,5 Gew.-% auf, der K-Wert des Produktes (gemessen 1 %ig in Ethanol) lag bei 35,3, beim Verdünnen der Lösung mit Wasser auf 5 % Feststoffgehalt wurde eine Lösung mit NTU-Wert von 1,3 erhalten. Die Restmonomerwerte lagen bei Werten von kleiner als 50 ppm. sowohl für N-Vinylpyrrolidon, als auch für Vinylacetat.

### Beispiel 2

Monomerzulauf I:
1000 g N-Vinylpyrrolidon
450 g Vinylacetat
1000 g Isopropanol
Starterzulauf I:
8 g 2,2'-Azo-bis-isovaleronitril
200 g Ethanol
Zugabedauer: 7 Stunden
Monomerzulauf II:
50 g N-Vinylpyrrolidon
Zugabedauer: 1 Stunde
Starterzulauf II:
10 g Di-tert.-butyl-peroxid
350 g Isopropanol.

Die erhaltene klare, farblose und viskose Lösung wies einen Feststoffgehalt von 50,1 Gew.-% auf, der K-Wert des Produktes (gemessen 1 %ig in Isopropanol) lag bei 27,6, beim Verdünnen der Lösung mit Wasser auf 5 % Feststoffgehalt wurde eine Lösung mit NTU-Wert von 0,8 erhalten. Die Restmonomerwerte lagen bei Werten von kleiner als 20 ppm N-Vinylpyrrolidon und 75 ppm Vinylacetat.

### Beispiel 3

Monomerzulauf I:
600 g N-Vinylpyrrolidon
600 g Vinylacetat
750 g Ethanol
Starterzulauf I:
6 g 2,2'-Azo-bis-isovaleronitril
250 g Ethanol
Zugabedauer: 8 Stunden
Monomerzulauf II:
300 g N-Vinylpyrrolidon
300 g Ethanol
Zugabedauer: 2 Stunden
Starterzulauf II:
10 g Di-tert.-Butylperoxid
300 g Ethanol.

Die erhaltene klare, farblose und viskose Lösung wies einen Feststoffgehalt von 50,0 Gew.-% auf, der K-Wert des Produktes (gemessen 1 %ig in Ethanol) lag bei 30,2, beim Verdünnen der Lösung mit Wasser auf 5 % Feststoffgehalt wurde eine Lösung mit NTU-Wert von 1,1 erhalten. Die Restmonomerwerte lagen bei Werten von kleienr als 1 ppm für N-Vinylpyrrolidon und kleiner als 20 ppm für Vinylacetat.

### Beispiel 4

Monomerzulauf I:
650 g N-Vinylpyrrolidon
600 g Vinylacetat
250 g Ethanol
Starterzulauf I:
2,5 g 2,2'-Azo-bis-isovaleronitril
130 g Ethanol
Zugabedauer: 8 Stunden
Monomerzulauf II:
250 g N-Vinylpyrrolidon
100 g Ethanol
Zugabedauer: 2 Stunden
Starterzulauf II:
10 g Di-tert.-butylperoxid
1050 g Ethanol.
die erhaltene klare, farblose und viskose Lösung wies einen Feststoffgehalt von 50,3 Gew.-% auf, der K-Wert des Produktes (gemessen 1 %ig in Ethanol) lag bei 43,8, beim Verdünnen der Lösung mit Wasser auf 5 % Feststoffgehalt wurde eine Lösung mit NTU-Wert von 2,0 erhalten. Die Restmonomerwerte lagen bei Werten von 10 ppm für N-Vinylpyrrolidon und 70 ppm für Vinylacetat.

### Beispiel 5

Monomerzulauf I:
600 g N-Vinylpyrrolidon
750 g Vinylacetat
400 g Ethanol
Starterzulauf I:
3 g 2,2'-Azo-bis-isovaleronitril
120 g Ethanol
Zugabedauer: 7 Stunden
Monomerzulauf II:
150 g N-Vinylpyrrolidon
100 g Ethanol
Zugabedauer: 1,5 Stunden
Starterzulauf II:
10 g Di-tert.-Butylperoxid
930 g Ethanol
Die erhaltene klare, farblose und viskose Lösung wies einen Feststoffgehalt von 51 % Gew.-% auf, der K-Wert des Produktes (gemessen 1 %ig in Ethanol) lag bei 34,6, beim Verdünnen der Lösung mit Wasser auf 5 % Feststoffgehalt wurde eine Lösung mit NTU-Wert von 2,3 erhalten, diese Lösung trübt beim Erwärmen auf Temperaturen größer als 42°C ein. Die Restmonomerwerte lagen bei Werten von 30 ppm für N-Vinylpyrrolidon und 30 ppm für Vinylacetat.

### Beispiel 6

Analog Beispiel 5, jedoch unter Verwendung von Isopropanol als Lösungsmittel.

Die erhaltene klare, farblose und viskose Lösung wies einen Feststoffgehalt von 50,5 Gew.-% auf, der K-Wert des Produktes (gemessen 1%ig) lag bei 27,5, beim Verdünnen der Lösung mit Wasser auf 5 % Feststoffgehalt wurde eine Lösung mit NTU-Wert von 0,6 erhalten, diese Lösung trübt beim Erwärmen auf Temperaturen größer als 42°C ein. Der Restmonomergehalt lag bei kleiner als 50 ppm N-Vinylpyrrolidon.

### Vergleichsbeispiel 1

Monomerzulauf I:
wie in Beispiel 1
Starterzulauf I:
8 g tert.-Butylperoryoctoat
200 g Ethanol
Zugabedauer: 7 Stunden
Monomerzulauf I:
wie in Beispiel 1
Starterzulauf II:
10 g 2,5-Dimethyl-2,5-bis(tert.-butylpyeroxy)-hexan
350 g Ethanol.

Die so erhaltene klare, farblose und viskose Lösung wies beim Verdünnen mit Wasser auf einen Feststoffgehalt von 5 Gew.-% einen NTU-Wert von über 200 auf.

## Patentansprüche

1. Verfahren zur Herstellung von in Wasser klar löslichen, restmonomerenarmen Copolymerisaten aus
(A) 45 - 90 Gew.-% N-Vinylpyrrolidon,
(B) 10 - 55 Gew.-% Vinylacetat
(C) 0 - 10 Gew.-% weiterer radikalisch copolymerisierbarer Monmeren
durch radikalische Polymerisation in einem organischen Lösungsmittel in Gegenwart eines Radikalinitiators, dadurch gekennzeichnet, daß man
(I) zunächst eine Mischung der Monomeren (A), (B) und (C), welche höchstens 15 Gew.-% der Gesamtmenge des Monomeren (A) enthält, copolymerisiert, und
(II) die Polymerisation unter Zugabe der Restmenge des Monomeren (A) fortsetzt,
wobei die Polymerisation der Verfahrensschritte (I) und (II) bei Temperaturen von 60 bis 100°C in Gegenwart einer Azoverbindung als Radikalinitiator durchgeführt wird, und
(III) anschließend eine Nachpolymerisiation unter Verwendung von Radikalinitiatoren der allgemeinen Formel I
R¹-O-O-R² I
worin R¹ für einen Alkylrest mit 4 bis 8 C-Atomen steht und R² für Wasserstoff oder R¹ oder für -R³-O-O-R¹, worin R³ einen linearen oder verzweigten Alkylenrest mit 4 bis 10 C-Atomen bedeutet, bei Temperaturen von 110 bis 150°C durchführt.

2. Verfahren nach Anspruch 1, dadurch gekennzeichnet, daß als Radikalinitiator in Verfahrensschritt (III) ein Dialkylperoxid verwendet wird.

3. Verfahren nach Anspruch 1 oder 2, dadurch gekennzeichnet, daß in Verfahrensschritt (I) eine Monomerenmischung copolymerisiert wird, welche 5 bis 15 Gew.-% der Gesamtmenge an verwendetem Monomer (A) enthält.
